(19) Europäisches Patentamt
European Patent Office
Office européen des brevets

(11) **EP 3 607 186 B1**

(12) **EUROPÄISCHE PATENTSCHRIFT**

(45) Veröffentlichungstag und Bekanntmachung des Hinweises auf die Patenterteilung:
**29.03.2023   Patentblatt 2023/13**

(21) Anmeldenummer: **18716177.3**

(22) Anmeldetag: **29.03.2018**

(51) Internationale Patentklassifikation (IPC):
**F02B 23/06** (2006.01)    **F02M 61/18** (2006.01)
**C10L 1/185** (2006.01)   **C10L 1/02** (2006.01)
**F02B 1/14** (2006.01)     **F02F 3/26** (2006.01)
**F02B 3/08** (2006.01)     **F02B 23/10** (2006.01)

(52) Gemeinsame Patentklassifikation (CPC):
**F02B 23/0672; C10L 1/026; F02B 23/0651;**
**F02B 23/0669; F02B 23/0696;** F02B 1/14;
F02B 3/08; F02B 2023/103; F02F 3/26; Y02T 10/12

(86) Internationale Anmeldenummer:
**PCT/EP2018/058064**

(87) Internationale Veröffentlichungsnummer:
**WO 2018/184972 (11.10.2018 Gazette 2018/41)**

(54) **BRENNRAUMANORDNUNG FÜR EINE BRENNKRAFTMASCHINE UND VERWENDUNG EINER BRENNRAUMANORDNUNG ZUM EINSPRITZEN VON OME-KRAFTSTOFF**

COMBUSTION CHAMBER ARRANGEMENT FOR AN INTERNAL COMBUSTION ENGINE AND USE OF A COMBUSTION CHAMBER IN ORDER TO INJECT OME-TYPE FUEL

CHAMBRE DE COMBUSTION POUR UN MOTEUR À COMBUSTION INTERNE ET UTILISATION D'UNE CHAMBRE DE COMBUSTION POUR INJECTER UN CARBURANT DE TYPE OME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2017   DE 102017206015**

(43) Veröffentlichungstag der Anmeldung:
**12.02.2020   Patentblatt 2020/07**

(73) Patentinhaber: **Vitesco Technologies GmbH**
**93055 Regensburg (DE)**

(72) Erfinder:
• **KASTNER, Oliver**
  **93093 Donaustauf (DE)**
• **MAIWALD, Oliver**
  **64625 Bensheim (DE)**
• **RÖSEL, Gerd**
  **93055 Regensburg (DE)**
• **BRÜCK, Rolf**
  **51429 Bergisch Gladbach (DE)**

(74) Vertreter: **Vitesco Technologies**
**Landsberger Str. 187, Haus D**
**80687 München (DE)**

(56) Entgegenhaltungen:
WO-A1-2016/051623      DE-B3-102017 206 019
DE-B3-102017 206 021      FR-A1- 3 016 926

• **EBERHARD JACOB ET AL: "Synthetische Kraftstoffe - OME1: Ein potenziell nachhaltig hergestellter Dieselkraftstoff", MTZ - MOTORTECHNISCHE ZEITSCHRIFT, Bd. 35, 1. Januar 2014 (2014-01-01), Seiten 325-347, XP055475922, ISSN: 0024-8525**
• **Blei Ingo: "Alternative Kraftstoffe im variablen Pkw-Dieselmotor", , 1. Januar 2014 (2014-01-01), XP055475960, ISBN: 978-3-95404-701-7 Gefunden im Internet: URL:https://sf8b4942a8784a38f.jimcontent.com/download/version/1512951160/module/9189487469/name/kostenloser%20Download%20Band% 207.pdf [gefunden am 2018-05-16]**

**Beschreibung**

Die Erfindung betrifft eine Brennraumanordnung zum Ausbilden eines Brennraumes für eine Brennkraftmaschine zum Verbrennen eines in den Brennraum eingespritzten OME-Kraftstoffes, sowie die Verwendung einer solchen Brennraumanordnung zum Einspritzen von OME-Kraftstoff in den Brennraum eine Brennkraftmaschine.

Die FR 3016926 A1 offenbart eine Brennraumanordnung für eine Brennkraftmaschine, die zum Verbrennen eines in den Brennraum eingespritzten OME-Kraftstoffes geeignet ist. Sie weist auf einen Muldenkolben, eine Kolbenstirnseite, eine Mulde, symmetrisch um die Kolbenlängsachse ausgebildet, einen Dom mit einer Domspitze und eine Ausnehmung. Die Tiefe der Ausnehmung in der Streckungsrichtung beträgt maximal ein Viertel des Abstandes der Kolbenlängsachse zu dem parallel zu der Kolbenlängsachse verlaufenden Bereich der Seitenwand.

Aus der WO 2016/051623 A1 ist ein Dieselmotor bekannt mit einer Turbine, die in einem Auslasskanal angeordnet ist, einem Kompressor, der in einem Ansaugkanal angeordnet ist und einem Turbolader mit mehreren Düsenflügeln, die so um die Turbine angeordnet sind, dass die Winkel der mehreren Düsenflügel geändert werden können, um die Strömungsgeschwindigkeit des abgegebenen Gases zu steuern, das gegen die Turbine kollidiert.

Bislang ist es bekannt, als Kraftstoff für eine Brennkraftmaschine Diesel oder Benzin bzw. Gas in einen Brennraum einzuspritzen, indem der jeweilige Kraftstoff verbrannt und dabei in dem Kraftstoff gespeicherte chemische Energie in Bewegungsenergie umgewandelt wird, sodass ein Kolben, der in dem Brennraum angeordnet ist, sich in Bewegung setzt und somit die Brennkraftmaschine antreibt. Wie der Brennraum zum Verbrennen des Diesels bzw. des Benzins ausgestaltet sein muss, um optimal Energieeffizient zu sein und eine möglichst schadstoffarme Verbrennung zu ermöglichen, ist gut untersucht und bekannt.

Nun besteht jedoch die Problematik, dass besonders bei der Verwendung von Dieselkraftstoff gesetzliche Auflagen bezüglich des Klimaschutzes, das heißt insbesondere bezüglich unerwünschter Emissionen, immer schwieriger zu erfüllen sind.

Daher gehen Bestrebungen dahin, Dieselkraftstoff durch synthetische Kraftstoffe zu ersetzen, die bei ihrer Verbrennung deutlich weniger Emissionen freisetzen.

Ein Beispiel für einen solchen synthetischen Kraftstoff ist Oxymethylenether, sogenanntes OME, der eine besondere Eignung als Kraftstoff für Dieselmotoren aufweist, da er, wie auch Dieselkraftstoff, selbstzündend verbrennt. Im Gegensatz zu Diesel verbrennt OME jedoch deutlich emissionsärmer. Es wäre daher denkbar, Dieselkraftstoff auf lange Sicht durch OME-Kraftstoff sukzessive zu ersetzen.

Trotz ähnlicher Zündeigenschaften von Dieselkraftstoff und OME-Kraftstoff bestehen Unterschiede in anderen physikalischen Parametern, insbesondere beim Heizwert $H_U$, der bei OME-Kraftstoff im Vergleich zu Dieselkraftstoff deutlich geringer ist. Der Heizwert $H_U$ entspricht der Wärmemenge, die bei einer gleichen Masse m an Kraftstoff erzeugt werden kann. Im Schnitt ist der Heizwert $H_U$ bei OME-Kraftstoffen etwa halb so groß wie bei Dieselkraftstoffen, das heißt, es müsste, wenn nur der Heizwert $H_U$ betrachtet wird, für eine gleiche zu erzeugende Wärme - bzw. Energiemenge etwa im Schnitt die doppelte Masse m an Kraftstoff verbrannt werden.

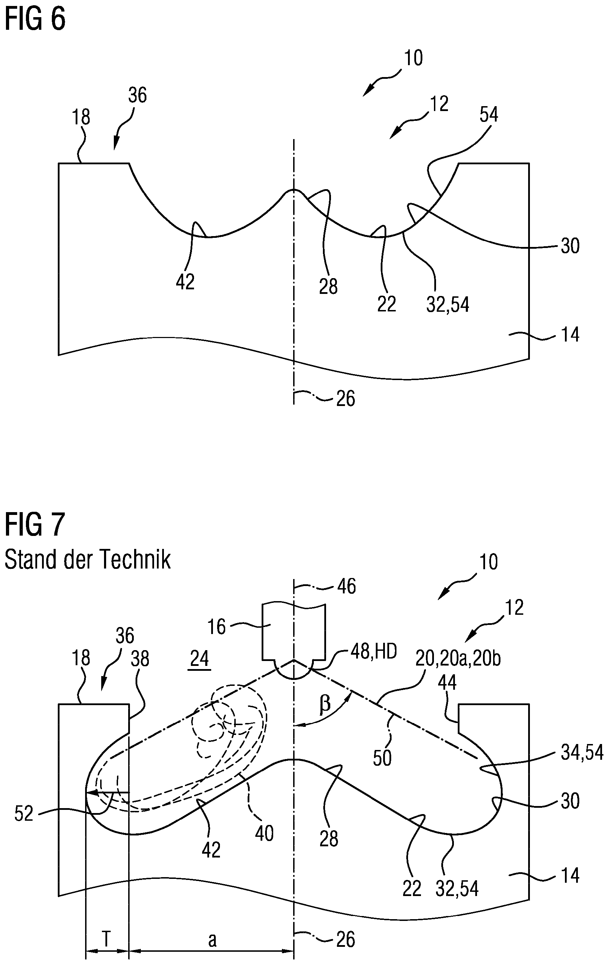

Wird OME-Kraftstoff in einen Standard-Brennraum einer Diesel-Brennkraftmaschine eingespritzt, ergeben sich folgende Problematiken, die mit Bezug auf Fig. 7 kurz erläutert werden.

Fig. 7 zeigt eine Schnittdarstellung eines Brennraumes 10 für eine Diesel-Brennkraftmaschine. In dem Brennraum 10 ist eine Brennraumanordnung 12 vorgesehen, die eine Muldenkolben 14 und einer Einspritzdüse 16 umfasst. Die Einspritzdüse 16 ist derart zu einer Kolbenstirnseite 18 gerichtet angeordnet, dass Kraftstoff 20, der von der Einspritzdüse 16 in den Brennraum 10 eingespritzt wird, auf der Kolbenstirnseite 18 auftrifft.

Der Muldenkolben 14 weist eine Mulde 22 auf, in die der eingespritzte Kraftstoff 20, beispielsweise Dieselkraftstoff 20a, von der Einspritzdüse 16 gespritzt wird, und wo sich der Kraftstoff 20 durch eine spezielle geometrische Ausgestaltung der Mulde 22 mit einer ebenfalls in dem Brennraum 10 vorhandenen Luft 24 vermischt. Durch translatorische Auf- und Abbewegung des Muldenkolbens 14 entlang einer Kolbenlängsachse 26 verdichtet sich der Kraftstoff 20, der in den Brennraum 10 eingespritzt worden ist und sich mit der Luft vermischt hat, und entzündet sich an einem bestimmten Verdichtungspunkt selbst. Durch diese Entzündung wird chemische Energie, die in dem Kraftstoff 20 gespeichert ist, in kinetische Energie umgewandelt und für den Antrieb eines Dieselmotors verwendet.

In Fig. 7 ist zu erkennen, dass die Mulde 22 eine spezielle geometrische Form aufweist. Sie umfasst einen symmetrisch um die Kolbenlängsachse 26 zentral angeordneten Dom 28, sowie eine ebenfalls symmetrisch um die Kolbenlängsachse 26 ausgebildete Seitenwand 30 zum Begrenzen der Mulde 22. Zwischen dem Dom 28 und der Seitenwand 30 ist ein U-förmiger Übergangsbereich 32 vorgesehen. Die Seitenwand 30 bildet dadurch, dass eine radial zu der Kolbenlängsachse 26 angeordnete, sich von der Kolbenlängsachse 26 weg erstreckende Ausnehmung 34 ausgebildet ist, im Bereich eines Kolbenendes 36 eine Muldenlippe 38 aus, die in Richtung auf den Dom 28 über die Mulde 22 ragt.

Durch diese spezielle geometrische Ausgestaltung ist es möglich, Dieselkraftstoff 20a so von der Einspritzdüse 16 einspritzen zu lassen, dass er in der Ausnehmung 34 auf die Mulde 22 auftrifft, dort durch die Form der Ausnehmung 34 und den U-förmigen Übergangsbereich 32 sowie den Dom 28 kreisförmig nach innen abgelenkt wird und somit eine Verwirbelung 40 ausbildet, durch die sich der Dieselkraftstoff 20a besonders gut mit der vorhanden Luft 24 vermischen kann.

Durch die besonders gute Vermischung von Luft 24 und Diesel-kraftstoff 20a entstehen bei der Verbrennung deutlich bessere Emissionswerte und insbesondere eine verringerte Rußbildung.

Wird nun eine solche auf Diesel-Kraftstoff 20a ausgelegte Brennraumanordnung 12 verwendet, um OME-Kraftstoff 20b in den Brennraum 10 einzuspritzen, besteht zunächst die Problematik, dass der OME-Kraftstoff 20b durch den geringeren Heizwert $H_U$ deutlich weniger kinetische Energie erzeugt als der bislang verwendete Dieselkraftsoff 20a bei einer gleichen eingespritzten Kraftstoffmasse m. Um dies auszugleichen, müsste die Einspritzdüse 16 so angepasst werden, dass entsprechend des Faktors, um den der OME-Kraftstoff 20b weniger kinetische Energie erzeugt als ein Standard-Dieselkraftstoff 20a, die Einspritzdüse 16 in ihrem Durchfluss HD, das heißt der Masse m an Kraftstoff 20, der pro vordefinierter Zeiteinheit $\Delta t$ in den Brennraum 10 gelangt, vergrößert ist. Das bedeutet jedoch, dass in der gleichen Zeiteinheit $\Delta t$ deutlich mehr Masse m an Kraftstoff 20 in der Mulde 22 abbrennt.

In Versuchen hat sich herausgestellt, dass dadurch die Muldenlippe 38 bei einer gleichen erwünschten Wärme - bzw. Energieerzeugung abbrennt und der Muldenkolben 14 somit zerstört wird.

Aufgabe der Erfindung ist es daher, eine Brennraumanordnung zum Ausbilden eines Brennraumes für eine Brennkraftmaschine vorzuschlagen, mit der OME-Kraftstoff dauerhaft zur Erzeugung einer entsprechend einem Dieselkraftstoff gleichen vordefinierten zu erzeugenden Wärme bzw. Leistung verbrannt werden kann.

Diese Aufgabe wird mit einer Brennraumordnung mit der Merkmalskombination des Anspruches 1 gelöst.

Die Verwendung der Brennraumanordnung zum Einspritzen von OME-Kraftstoff in den Brennraum einer Brennkraftmaschine ist Gegenstand des nebengeordneten Anspruches.

Vorteilhafte Ausgestaltungen der Erfindung sind Gegenstand der abhängigen Ansprüche.

Eine Brennraumanordnung zum Ausbilden eines Brennraumes für eine Brennkraftmaschine zum Verbrennen eines in dem Brennraum eingespritzten OME-Kraftstoffes weist einen Muldenkolben auf, der sich im Betrieb in dem Brennraum entlang einer Kolbenlängsachse translatorisch bewegt. Der Muldenkolben umfasst an einer Kolbenstirnseite eine Mulde zur Aufnahme des in den Brennraum eingespritzten OME-Kraftstoffes, wobei die Mulde symmetrisch um die Kolbenlängsachse ausgebildet ist und einen zentral angeordneten Dom, der in Richtung von einem Muldenboden weg erstreckend umlaufend um die Kolbenlängsachse angeordnet ist, sowie eine umlaufend um die Kolbenlängsachse angeordnete, symmetrisch zu der Kolbenlängsachse ausgebildete Seitenwand zum Begrenzen der Mulde aufweist.

Die Seitenwand der Mulde umfasst einen parallel zu der Kolbenlängsachse verlaufenden Bereich und eine sich radial von der Kolbenlängsachse weg erstreckende, umlaufend um die Kolbenlängsachse angeordnete Ausnehmung. Die Tiefe der Ausnehmung in deren Erstreckungsrichtung beträgt dabei maximal 1/4 des Abstandes der Kolbenlängsachse zu dem parallel zu der Kolbenlängsachse verlaufenden Bereich der Seitenwand.

Dadurch bildet sich eine Muldenlippe benachbart zu einem stirnseitigen Kolbenende des Muldenkolbens aus, die über die Mulde hinwegragt, aber so geringfügig ausgeprägt ist, dass die Gefahr, dass diese Muldenlippe im Betrieb beim Einspritzen des OME-Kraftstoffes und dessen Verbrennung abbrennt, deutlich verringert ist im Vergleich zu einer Anordnung einer stark ausgeprägten Muldenlippe.

Alternativ ist die Seitenwand der Mulde in einem Schnitt parallel zu der Kolbenlängsachse zumindest in einem benachbart zu einem stirnseitigen Kolbenende angeordneten Bereich geradlinig ausgebildet. Das bedeutet, bei einer solchen Ausführungsform weist die Mulde überhaupt keine Muldenlippe mehr auf, die im Betrieb abbrennen könnte.

In einer beispielhaften Ausführungsform ist dabei die Seitenwand der Mulde von der Kolbenlängsachse weg geneigt ausgebildet.

Es ist jedoch auch möglich, dass die Seitenwand der Mulde in dem benachbart zu dem stirnseitigen Kolbenende angeordneten Bereich vollständig parallel zu der Kolbenlängsachse angeordnet ist.

In beiden Ausführungsformen gibt es keine Muldenlippe, die in die Mulde bzw. über die Mulde hineinragt.

Vorzugsweise weist die Seitenwand der Mulde eine Krümmung auf, die sich ausgehend von dem Muldenboden bis zu einem stirnseitigen Kolbenende stetig verkleinert. Dadurch ist es möglich, dass die Seitenwand zumindest in dem benachbart zu dem stirnseitigen Kolbenende angeordneten Bereich einen geradlinigen Verlauf aufweisen kann.

Vorzugsweise ist eine Einspritzdüse zum Einspritzen des OME-Kraftstoffes in den Brennraum vorgesehen, wobei die Einspritzdüse symmetrisch um eine Düsenlängsachse ausgebildet ist, wobei die Einspritzdüse derart zu der Kolbenstirnseite gerichtet angeordnet ist, dass die Kolbenlängsachse und die Düsenlängsachse zusammenfallen, wobei die Einspritzdüse eine Mehrzahl von Einspritzlöchern mit jeweils einer Lochachse zum Einspritzen des OME-Kraftstoffes aufweist, wobei ein Höhenwinkel $\beta$ zwischen jeder der Lochachsen und der Düsenlängsachse so ausgebildet ist, dass der eingespritzte OME-Kraftstoff im Betrieb in einem U-förmigen Übergangsbereich zwischen der Seitenwand und dem Dom näher an dem Dom als an der Seitenwand auftrifft.

Die Lochachse entspricht einer Strahlachse des eingespritzten Kraftstoffes.

Wie bereits beschrieben, erhält ein normalerweise mit einer solchen Brennraumanordnung eingespritzter Dieselkraftstoff einen Bewegungsimpuls in der Mulde, der zu einer Rückströmung in Richtung des Domes führt, so dass der Dieselkraftstoff sich gut mit der Luft, die um den Dom herum angeordnet ist, mischt. Dies ist wichtig, um Emissionen, vor allem Rußbildung, klein zu halten, da durch die Rückströmung und die folgende Vermischung das Gemisch Luft/Dieselkraftstoff optimiert wird. Aus diesem Grund weist die Mulde im Schnitt der Kolbenlängsachse die spezielle Form mit Dom, Übergangsbereich und Seitenwand auf.

OME-Kraftstoff hat nun jedoch im Vergleich zu Dieselkraftstoff einen deutlich kleineren Heizwert $H_U$. Um eine gleiche Leistung wie beim Einspritzen von Dieselkraftstoff zu erhalten, wobei unter Leistung eine gleiche vordefinierte zu erzeugende Wärme pro Zeiteinheit $\Delta t$ durch die Verbrennung verstanden werden soll, muss daher eine entsprechend des Faktors der Heizwertverringerung vergrößerte Masse m an OME-Kraftstoff in der gleichen Zeiteinheit $\Delta t$ eingespritzt und verbrannt werden. Zusätzlich hat OME-Kraftstoff einen anderen Zündverzug als Dieselkraftstoff. Die beiden Faktoren - Zündverzug und vergrößerte Masse m an eingespritztem Kraftstoff - haben einen veränderten Strahlimpuls von OME-Kraftstoff im Vergleich zu Dieselkraftstoff zur Folge und beeinflussen den Ort in der Mulde, wo der eingespritzte Kraftstoff letztendlich abbrennt.

OME-Kraftstoff brennt daher näher an einer Muldenlippe ab als Dieselkraftstoff, was dazu führt, dass die Muldenlippe und somit der Muldenkolben zerstört wird. Um eine gute Gemischbildung Dieselkraftstoff-Luft auszubilden, wird Dieselkraftstoff normalerweise auf die Seitenwand der Mulde gespritzt. Entsprechend sind die Einspritzlöcher der Einspritzdüse so angeordnet, dass Dieselkraftstoff gezielt auf die Seitenwand auftrifft und dort einen Bewegungsimpuls für eine Rückströmung erhält, um sich dann im Bereich des Domes mit der umgebenden Luft vermischen zu können. Da bei der Verbrennung von OME-Kraftstoff jedoch deutlich weniger Emissionen, insbesondere kein Ruß, entstehen, ist die Gemischbildung Luft-Kraftstoff weniger von Belang. Daher kann auf ein gezieltes Auftreffen des eingespritzten OME-Kraftstoffes auf die Seitenwand verzichtet werden, was beim Dieselkraftstoff nicht möglich wäre. Um daher ein Abbrennen der Muldenlippe zu verhindern, wird vorgeschlagen, den Höhenwinkel β so auszubilden, dass der OME-Kraftstoff statt wie bisher beim Dieselkraftstoff zwingend vorgesehen auf die Seitenwand nun im Übergangsbereich nahe an dem Dom auftrifft.

Vorteilhaft ist der Höhenwinkel β so ausgebildet, dass der eingespritzte OME-Kraftstoff im Betrieb auf dem Dom selbst auftrifft.

Beim Einspritzen von Dieselkraftstoff wird gezielt vermieden, dass der Dieselkraftstoff auf den Dom auftrifft, da so eine für die Verbrennung notwendige Gemischbildung nicht gewährleistet werden kann. Da bei OME-Kraftstoff die Gemischbildung jedoch kein Problem darstellt, weil ohnehin kein Ruß bei der Verbrennung entsteht, ist es möglich, den OME-Kraftstoff so weit von der Seitenwand auftreffen zu lassen, dass er sogar auf den Dom auftreffen kann, und so ein Abbrennen der Muldenlippe verhindert werden kann.

Der Höhenwinkel β liegt bevorzugt in einem Bereich von 0° bis 75°, insbesondere 30° bis 70° und besonders vorteilhaft 45° bis 65°. Bei Dieselkraftstoff darf der Höhenwinkel β aufgrund der nötigen Gemischbildung nicht kleiner als 75° sein und liegt eigentlich in einem Bereich von 75° bis 82°. Wird der Höhenwinkel β kleiner als diese Werte, entsteht unerwünscht viel Ruß als Verbrennungsprodukt. Dies ist bei OME-Kraftstoff jedoch unbeachtlich, so dass gezielt der Höhenwinkel β so eingestellt werden kann, dass der Strahl des eingespritzten OME-Kraftstoffes nicht mehr im Bereich der Muldenlippe in die Mulde auftrifft, sondern zentraler, was das Abbrennen der Muldenlippe verhindert.

Die Einspritzdüse weist bevorzugt einen Durchfluss $HD_{OME}$ auf, der einem um einen Vergrößerungsfaktor V vergrößerten Durchfluss $HD_{Diesel}$ einer Einspritzdüse für einen Dieselkraftstoff entspricht, wobei der Vergrößerungsfaktor V abhängig ist von einem Verhältnis des Heizwertes von Dieselkraftstoff $H_{U,Diesel}$ zu einem Heizwert von OME-Kraftstoff $H_{U,OME}$ eines im Betrieb einzuspritzenden OME-Kraftstoffes, wobei gilt:

$$V = (H_{u,Diesel}/H_{u,OME}) * K,$$

wobei 0,6 < K < 0,85, insbesondere 0,7 < K < 0,8.

Bezüglich des unterschiedlichen Heizwertes $H_U$ von OME-Kraftstoff und Dieselkraftstoff, die sich im Schnitt um einen Faktor von etwa 2 unterscheiden, müsste die Einspritzdüse normalerweise so ausgelegt sein, dass der Durchfluss HD für OME-Kraftstoff etwa doppelt so groß ist wie für Dieselkraftstoff. Dieser doppelt so große Durchfluss HD führt zu einem großen Strahlimpuls, der zur Folge hat, dass der Abbrennort des Kraftstoffes im Vergleich zu Dieselkraftstoff von dem Dom weg in Richtung der Muldenlippe wandert. Dadurch wird die Muldenlippe heißer und brennt schneller ab.

In Versuchen hat sich jedoch überraschend herausgestellt, dass OME-Kraftstoff schneller abbrennt als Dieselkraftstoff, d. h. die jeweils zu verbrennende Masse m der beiden Kraftstoffe, die zu einer gleichen Wärmeentwicklung führt, benötigt bei OME-Kraftstoff eine geringere Zeiteinheit $\Delta t$ als bei Diesel-kraftstoff. Dadurch resultiert eine geringere Temperaturentwicklung im Abgas. Insbesondere ist der Ausbrand, d.h. das Ende der Verbrennung, für OME-Kraftstoff deutlich schneller erreicht als für Dieselkraftstoff.

Die Abgastemperatur ist für dem Brennraum nachgelagerte Elemente der Brennkraftmaschine wichtig und darf einen vorbestimmten Wert nicht überschreiten. Durch das schnellere Abbrennen des OME-Kraftstoffes im Vergleich zu Dieselkraftstoff entsteht aber überraschenderweise eine verringerte Temperatur im Abgas, die dazu führt, dass die jeweils zu verbrennende Masse m an Kraftstoff für eine gleiche Wärmeentwicklung über einen verlängerten Zeitraum in den Brennraum eingespritzt werden kann.

Dadurch resultiert, dass die Einspritzdüse nicht so ausgelegt werden muss, dass ihr Durchfluss HD um einen Vergrößerungsfaktor V vergrößert wird, der dem Verhältnis der Heizwerte $H_U$ der beiden Kraftstoffe entspricht, sondern dass die Einspritzdüse um weniger als diesen Vergrößerungsfaktor V vergrößert werden muss. In Bezug auf die Temperaturentwicklung verringert sich der Vergrößerungsfaktor V um einen Faktor K, der in einem Bereich zwischen 0,6 und 0,85 liegt.

Der somit im Vergleich zu dem erwarteten Durchfluss HD verringerte Durchfluss HD der Einspritzdüse für den OME-Kraftstoff führt zu einem verringerten Strahlimpuls und somit einem Wegwandern des eingespritzten OME-Kraftstoffstrahls von der Seitenwand in Richtung auf den Dom.

In vorteilhafter Ausgestaltung weist die Einspritzdüse neun bis zwölf Einspritzlöcher auf, die symmetrisch um die Düsenlängsachse angeordnet sind. Einspritzdüsen für Dieselkraftstoff weisen normalerweise etwa sieben bis zehn Einspritzlöcher auf, um den Dieselkraftstoff in dem Brennraum gut verdüsen und ein optimales Gemisch mit Luft herstellen zu können. Um den Strahlimpuls des eingespritzten OME-Kraftstoffes zu verringern, ist es vorteilhaft, mehr Einspritzlöcher vorzusehen, als dies bei Dieselkraftstoff der Fall ist. Um jedoch weiterhin eine durchführbare Herstellung der Einspritzdüse gewährleisten zu können, hat sich eine Anzahl von Einspritzlöchern zwischen neun und zwölf als optimal herausgestellt.

Vorteilhaft wird eine oben beschriebene Brennraumanordnung verwendet, um OME-Kraftstoff in einen Brennraum einer Brennkraftmaschine einzuspritzen.

Die Brennraumanordnung ist dabei zum Einspritzen des OME-Kraftstoffes derart optimiert, dass ein Muldenkolben im Betrieb nicht mehr auf unerwünschte Weise zerstört wird.

Vorteilhafte Ausgestaltungen der Erfindung werden nachfolgend anhand der beigefügten Zeichnungen näher erläutert. Darin zeigt:

Fig. 1    eine Schnittdarstellung einer Brennraumanordnung zum Einspritzen von Kraftstoff in einen Brennraum einer Brennkraftmaschine aus dem Stand der Technik, wobei die Brennraumanordnung zum Einspritzen von Dieselkraftstoff ausgelegt ist;

Fig. 2    eine Schnittdarstellung einer Brennraumanordnung zum Einspritzen eines OME-Kraftstoffes in einen Brennraum einer Brennkraftmaschine;

Fig. 3    ein Diagramm, das ein Abbrennverhalten eines Dieselkraftstoffes im Vergleich zu einem Abbrennverhalten eines OME-Kraftstoffes schematisch darstellt;

Fig. 4    eine Schnittdarstellung einer Brennraumanordnung mit einem Muldenkolben, der eine für die Einspritzung von Dieselkraftstoff optimierte Mulde gemäß dem Stand der Technik aufweist;

Fig. 5    eine Schnittdarstellung einer Brennraumanordnung mit einem Muldenkolben, der eine Mulde mit einer für die Einspritzung von OME-Kraftstoff optimierten Geometrie gemäß einer ersten Ausführungsform aufweist;

Fig. 6    eine Schnittdarstellung einer Brennraumanordnung mit einem Muldenkolben, der eine Mulde mit einer für die Einspritzung von OME-Kraftstoff optimierten Geometrie gemäß einer zweiten Ausführungsform aufweist; und

Fig. 7    eine Schnittdarstellung eines Brennraumes für eine Diesel-Brennkraftmaschine aus dem Stand der Technik.

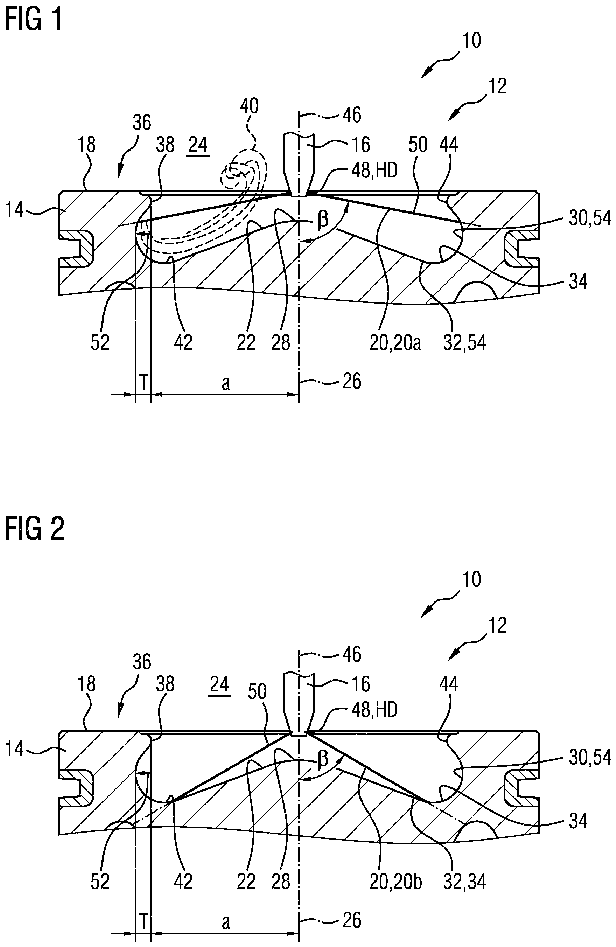

Fig. 1 zeigt eine Schnittdarstellung einer Brennraumanordnung 12 in einem Brennraum 10 einer Brennkraftmaschine aus dem Stand der Technik, wobei die Brennraumanordnung 12 für die Einspritzung von Dieselkraftstoff 20a optimiert ist. Die optimierte Brennraumanordnung 12 für Dieselkraftstoff 20a weist eine Einspritzdüse 16 auf, mit der der Dieselkraftstoff 20a in den Brennraum 10 eingespritzt wird. Zusätzlich ist ein Muldenkolben 14 vorgesehen, der eine Mulde 22 mit einer für die Einspritzung des Dieselkraftstoffes 20a optimierten Geometrie aufweist. Dabei wird der Dieselkraftstoff 20a von der Einspritzdüse 16 gezielt in die Mulde 22 eingespritzt.

Die Mulde 22 weist eine Geometrie auf, die dazu führt, dass der Dieselkraftstoff 20a in der Mulde 22 einen Bewegungsimpuls für eine Rückströmung erhält, so dass eine Verwirbelung 40 entsteht, damit der Dieselkraftstoff 20a sich gut mit der in dem Brennraum 10 angeordneten Luft 24 vermischen kann. Dies ist wichtig, um Emissionen, vor allem die Bildung von Rußpartikeln, klein zu halten. Durch die spezielle Geometrie der Mulde 22 wird demgemäß das Gemisch Luft 24-Dieselkraftstoff 20a optimiert. Die Mulde 22 ist im Schnitt so ausgebildet, dass sie zentral einen symmetrisch um eine Kolbenlängsachse 26a angeordneten Dom 28 ausbildet, der sich in Richtung von einem Muldenboden 42 weg erstreckt und umlaufend um die Kolbenlängsachse 26 angeordnet ist. Weiter umfasst die Mulde 22 eine Seitenwand 30, die die Mulde 22 begrenzt. Die Seitenwand 30 erstreckt sich im Wesentlichen parallel zu der Kolbenlängsachse 26, ist jedoch so ausgebildet, dass sie zwei Bereiche umfasst. Nämlich einerseits ist ein tatsächlich parallel zu der Kolbenlängsachse 26 verlaufender Bereich 44 vorgesehen, der direkt benachbart zu einem stirnseitigen Kolbenende 36 angeordnet ist. Weiter weist die Seitenwand 30 eine Ausnehmung 34 auf, die sich radial von der Kolbenlängsachse 26 weg erstreckt. Dadurch bildet sich in Draufsicht ein Hinterschnitt in der Mulde 22 und somit eine Muldenlippe 38 aus, die in Richtung auf die Kolbenlängsachse 26 über die Mulde 22 hinweg ragt.

Die Einspritzdüse 16 ist symmetrisch um eine Düsenlängsachse 46 ausgebildet und so zu einer Kolbenstirnseite 18 gerichtet angeordnet, dass die Düsenlängsachse 46 und die Kolbenlängsachse 26 zusammenfallen. Dadurch sind Einspritzlöcher 48, die sich in der Einspritzdüse 16 befinden, ebenfalls symmetrisch nicht nur um die Düsenlängsachse 46, sondern auch symmetrisch um die Kolbenlängsachse 26 ausgebildet und spritzen daher symmetrisch in die Mulde 22 Dieselkraftstoff 20a ein.

Zwischen dem Dom 28 und der Seitenwand 30 ist ein U-förmiger Übergangsbereich 32 angeordnet, um eine Krümmung 54 des Domes 28 in eine entgegengesetzt ausgerichtete Krümmung 54 der Seitenwand 30 im Bereich der Ausnehmung 34 zu überführen.

Die Einspritzlöcher 48 weisen jeweils eine Lochachse 50 auf, die im Wesentlichen der Strahlachse entspricht, auf der der Dieselkraftstoff 20a in der Mulde 22 auftrifft. Ein Winkel zwischen der jeweiligen Lochachse 50 und der Düsenlängsachse 46, die der Kolbenlängsachse 26 entspricht, wird dabei als Höhenwinkel β bezeichnet.

In der in Fig. 1 aus dem Stand der Technik bekannten Brennraumanordnung 12 für Dieselkraftstoff 20a ist der Höhenwinkel β so ausgelegt, dass der Dieselkraftstoff 20a im Betrieb in die Ausnehmung 34 und somit auf die Seitenwand 30 auftrifft. Durch die spezielle geometrische Form der Mulde 22 wird der auftreffende Dieselkraftstoff 20a in der Ausnehmung 34 nach unten, über den U-förmigen Übergangsbereich 32 auf den Dom 28 gelenkt und von dort nach oben weggeschleudert, so dass die Verwirbelung 40 entsteht und sich der Dieselkraftstoff 20a gut mit der Luft 24, die sich im Bereich um den Dom 28 befindet, vermischen kann. Dieses Gemisch entzündet sich dann bei der Bewegung des Muldenkolbens 14 von selbst, wobei die in dem Dieselkraftstoff 20a vorhandene chemische Energie in mechanische Energie umgewandelt wird.

Bei der Einspritzung von OME-Kraftstoff 20b statt des Dieselkraftstoffes 20a mit einer Anordnung gemäß Fig. 1 hätte dies zur Folge, dass vor allem im Volllastbetrieb die Muldenlippe 38 abbrennt und somit der Muldenkolben 14 zerstört wird. Um eine Brennkraftmaschine mit einer üblichen Lebensdauer bereitzustellen ist dies ein unerwünschter Effekt.

Das Abbrennen der Muldenlippe 38 resultiert im Wesentlichen dadurch, dass der OME-Kraftstoff 20b näher an der Muldenlippe 38 abbrennt als der Dieselkraftstoff 20a.

Dies kommt zum Einen daher, dass der OME-Kraftstoff 20b einen anderen Zündverzug als Dieselkraftstoff 20a hat, und zum Anderen mit einem größeren Strahlimpuls in der Mulde 22 auftrifft. Durch die veränderten Parameter Zündverzug und Strahlimpuls verändert sich auch der Ort in der Mulde 22, wo der Kraftstoff abbrennt. Dieser Ort liegt bei OME-Kraftstoff 20b näher an der Muldenlippe 38 als bei Dieselkraftstoff 20a.

Der veränderte Strahlimpuls resultiert insbesondere daher, dass aufgrund des deutlich geringeren Heizwertes $H_{U,OME}$ des OME-Kraftstoffes 20b im Vergleich zum Heizwert $H_{U,Diesel}$ des Dieselkraftstoffes 20a in der gleichen Zeiteinheit $\Delta t$ eine größere Kraftstoffmasse m eingespritzt werden muss, um eine gleiche Leistung wie bei dem Dieselkraftstoff 20a, d. h. eine gleiche vordefinierte zu erzeugende Wärme, freizusetzen. Daher wird die Einspritzdüse 16 mit einem größeren Durchfluss HD ausgebildet. Der größere Durchfluss HD resultiert jedoch in einer größeren Kraftstoffmasse m pro Zeiteinheit $\Delta t$, was einen größeren Strahlimpuls zur Folge hat.

Fig. 2 zeigt eine Schnittdarstellung einer bezüglich des Strahlimpulses optimierten Brennraumanordnung 12, mit der OME-Kraftstoff 20b in die Mulde 22 eingespritzt wird.

Bei Vergleich mit der Brennraumanordnung 12 in Fig. 1 ist zu sehen, dass ein Höhenwinkel β jeweils zwischen der Düsenlängsachse 46 und den Lochachsen 50 deutlich steiler ausgebildet ist bei der Einspritzung von OME-Kraftstoff 20b als bei der Einspritzung von Dieselkraftstoff 20a. Dadurch trifft der OME-Kraftstoff 20b in der Mulde 22 im U-förmigen Übergangsbereich 32 näher an dem Dom 28 als an der Seitenwand 30 auf. Die Einspritzlöcher 48 werden daher an der Einspritzdüse 16 so angeordnet, dass sich ein Höhenwinkel β ergibt, der kleiner ist als bei der Einspritzung von Dieselkraftstoff 20a.

Bei der Einspritzung von Dieselkraftstoff 20a muss wegen der Gemischbildung der Höhenwinkel β in einer Größenordnung von 75°, d. h. eigentlich in einem Bereich von 75° - 82° liegen. Der Höhenwinkel β kann bei der Einspritzung von Dieselkraftstoff 20a nicht kleiner sein, da sonst durch die nicht vollständige Gemischbildung von Dieselkraftstoff 20a und Luft 24 eine unerwünschte Rußbildung bei der Verbrennung des Dieselkraftstoffes 20a auftritt.

Bei OME-Kraftstoff 20b stellt jedoch die Rußentwicklung bei der Verbrennung kein Problem dar, da Ruß fast kein Verbrennungsprodukt ist. Deshalb wird der Höhenwinkel β so ausgewählt, dass der OME-Kraftstoff 20b näher an der Kolbenlängsachse 26, beispielsweise auf dem Dom 28 selbst, auftrifft, wie dies in Fig. 2 zu sehen ist. Damit erfolgt die Verbrennung des OME-Kraftstoffes 20b weiter von der Muldenlippe 38 entfernt und die Muldenlippe 38 brennt im Betrieb nicht mehr ab.

Der Höhenwinkel β liegt dabei in einem Bereich zwischen 0° und 75°, vorteilhaft zwischen 30° und 70°, und insbesondere zwischen 45° und 65°. Dies sind Winkelbereiche, die für die Einspritzung eines Dieselkraftstoffes 20a undenkbar wären.

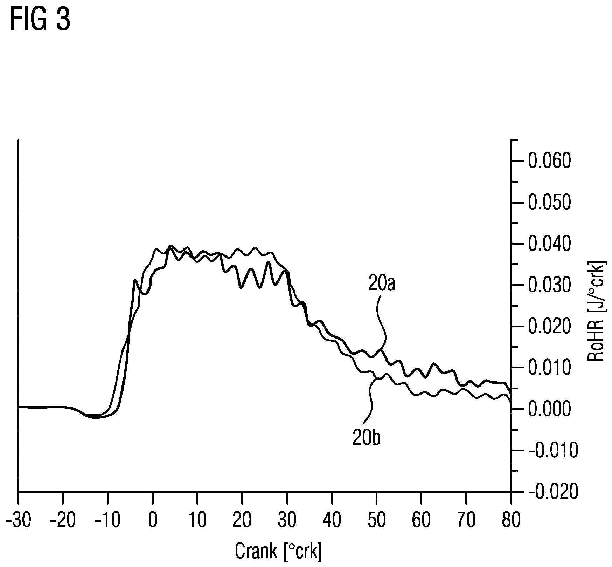

Fig. 3 zeigt ein Diagramm, das das Abbrennverhalten von Dieselkraftstoff 20a im Vergleich zu dem Abbrennverhalten von OME-Kraftstoff 20b darstellt. Auf der x-Achse ist dabei der Kurbelwellenwinkel °crk dargestellt, der im Wesentlichen einen Zeitablauf repräsentiert. Die y-Achse stellt die durch die Verbrennung freigesetzte Energie in J/°crk dar. Das Abbrennen des Dieselkraftstoffes 20a ist mit einer schwarzen Kurve dargestellt, während das Abbrennen des OME-Kraftstoffes 20b mit einer grauen Kurve dargestellt ist. Es ist zu sehen, dass beide Kraftstoffe 20 zunächst bei etwa -10 °crk einen abrupten Verbrennungsstart aufweisen und die Verbrennung mit der größten freigesetzten Energiemenge hauptsächlich in einem Plateaubereich zwischen 0 °crk und 30 °crk stattfindet. Das jeweilige Ende der Verbrennung ist nicht abrupt wie beim Verbrennungsstart, sondern läuft über die Zeit langsam aus. Es ist zu erkennen, dass der Dieselkraftstoff 20a noch über einen längeren Zeitraum Energie bzw. Wärme freisetzt (Kurbelwellenwinkelbereich 45 °crk - 70 °crk), während dies bei OME-Kraftstoff 20b nicht mehr der Fall ist. Hier wird das Ende der Freisetzung von Wärme bereits bei einem Kurbelwellenwinkel von etwa 55 °crk erreicht. OME-Kraftstoff 20b brennt also zeitlich gesehen schneller ab als Dieselkraftstoff 20a bei einer zu verbrennenden Masse m, die zu einer gleichen Wärmefreisetzung führt. Dadurch, dass der Dieselkraftstoff 20a über einen längeren Zeitraum °crk verbrennt, weisen die Abgase, die aus dieser Verbrennung resultieren, eine höhere Temperatur auf, als die von OME-Kraftstoff 20b. Dadurch, dass der OME-Kraftstoff 20b eine geringere Temperaturentwicklung im Abgas aufweist als der Dieselkraftstoff 20a ist es möglich, die Masse m, die zu einer gleichen Wärmefreisetzung führt, über einen verlängerten Zeitraum $\Delta t$ bzw. $\Delta$°crk in den Brennraum 10 einzuspritzen und zu verbrennen.

Wenn lediglich das Verhältnis der Heizwerte $H_U$ der beiden Kraftstoffe 20 betrachtet würde, müsste die Einspritzdüse 16 entsprechend dieses Verhältnisses in ihrem Durchfluss HD vergrößert werden, um eine gleiche Leistung/Wärmefreisetzung zu erreichen.

Der Durchfluss HD der Einspritzdüse 16 für den OME-Kraftstoff 20b müsste um einen Vergrößerungsfaktor V vergrößert werden im Verhältnis zu dem Durchfluss HD einer Einspritzdüse 16 für den Dieselkraftstoff 20a, um somit durch die Verbrennung einer vergrößerten Masse m die gleiche Leistung erzielen zu können. Es würde dabei die Beziehung gelten:

$$V = (H_{u,Diesel}/H_{u,OME}) * K,$$

Es hat sich nun jedoch überraschenderweise herausgestellt, dass OME-Kraftstoff 20b eine geringere Temperaturentwicklung im Abgas bei seiner Verbrennung aufweist und daher über einen verlängerten Zeitraum in den Brennraum 10 eingespritzt werden kann. Daher steht zum Einspritzen der um den Vergrößerungsfaktor V vergrößerten Masse m ein größerer Zeitraum zur Verfügung, in dem diese Masse m in den Brennraum 10 eingebracht werden kann. Daher muss die Einspritzdüse 16 nicht mehr einen Durchfluss HD aufweisen, der entsprechend dem Vergrößerungsfaktor V lediglich in Abhängigkeit der beiden Heizwerte $H_U$ betrachtet wird, sondern der Vergrößerungsfaktor V kann um einen Faktor K, der der geringeren Temperatur im Abgas entspricht, verkleinert werden.

Es gilt daher bei der Vergrößerung des Durchflusses HD der Einspritzdüse 16 für den OME-Kraftstoff 20b im Vergleich zu dem Durchfluss HD der Einspritzdüse 16 für den Dieselkraftstoff 20a:

$$V = (H_{u,Diesel}/H_{u,OME}) * K,$$

Aus Messungen hat sich ergeben, dass K vorteilhaft zwischen 0,6 und 0,85, und insbesondere zwischen 0,7 und 0,8 liegt.

Dies hat den Vorteil, dass die gleiche Masse m durch die verlängerte Zeitdauer, die sie eingespritzt wird, mit einem geringeren Strahlimpuls in der Mulde 22 auftrifft, und daher näher am Dom 28 als an der Seitenwand 30 abbrennt.

Unterscheidet sich der Heizwert $H_{U,OME}$ des OME-Kraftstoffes 20b daher beispielsweise von dem Heizwert $H_{U,Diesel}$ des Dieselkraftstoffes 20a um einen Vergrößerungsfaktor V = 2, muss der Durchfluss HD der Einspritzdüse 16 nicht, wie erwartet, verdoppelt werden, sondern kann mit einem Vergrößerungsfaktor V von lediglich 1,4 bis 1,7 multipliziert werden.

Der Unterschied des Heizwertes $H_U$ um einen Vergrößerungsfaktor V = 2 ist dabei nur beispielhaft genannt, da dieser Vergrö-ßerungsfaktor V von den Eigenschaften des jeweiligen OME-Kraftstoffes 20b abhängt, der für verschiedene OME-Kraftstoffe 20b unterschiedlich sein kann.

Um weiter den Strahlimpuls zu verringern, weist die Einspritzdüse 16 neun bis zwölf Einspritzlöcher 48 auf, über die die Kraftstoffmasse m des OME-Kraftstoffes 20b verteilt eingespritzt wird. Einspritzdüsen 16 für Dieselkraftstoff 20a haben im Vergleich dazu in der Regel eine Anzahl von Einspritzlöchern in einem Bereich zwischen sieben und zehn Einspritzlöchern 48. Die Einspritzlöcher 48 sind dabei symmetrisch um die Düsenlängsachse 46 angeordnet.

Um das Abbrennen der Muldenlippe 38 zu vermeiden, kann die Brennraumanordnung 12 wie oben beschrieben durch Anpassung der Geometrie der Einspritzdüse 16 optimiert werden.

Es gibt jedoch auch die Möglichkeit, stattdessen die Geometrie der Mulde 22 selbst anzupassen, um ein solches Abbrennen der Muldenlippe 38 verhindern.

Eine besonders vorteilhafte Ausgestaltung wäre eine Anpassung sowohl der Geometrie der Einspritzdüse 16 wie oben beschrieben als auch eine Anpassung der Geometrie der Mulde 22, die nachfolgend beschrieben wird.

Insbesondere ist die Geometrie der Mulde 22 vorteilhaft so ausgelegt, dass die Geometrie der Muldenlippe 38 an die Eigenschaften des neuen OME-Kraftstoffes 20b angepasst ist. Dabei ist es vorteilhaft, wenn die Muldenlippe 38 weniger stark ausgeprägt oder sogar ganz weggelassen wird, da, wie bereits oben erläutert, eine Auslegung der Muldengeometrie nach Gemischbildungskriterien für den Einsatz von OME-Kraftstoff 20b im Gegensatz zu dem Einsatz von Dieselkraftstoff 20a nicht notwendig ist.

Ist die Muldenlippe 38 nicht mehr oder nur sehr wenig ausgeprägt vorhanden, kann sie auch nicht mehr abbrennen.

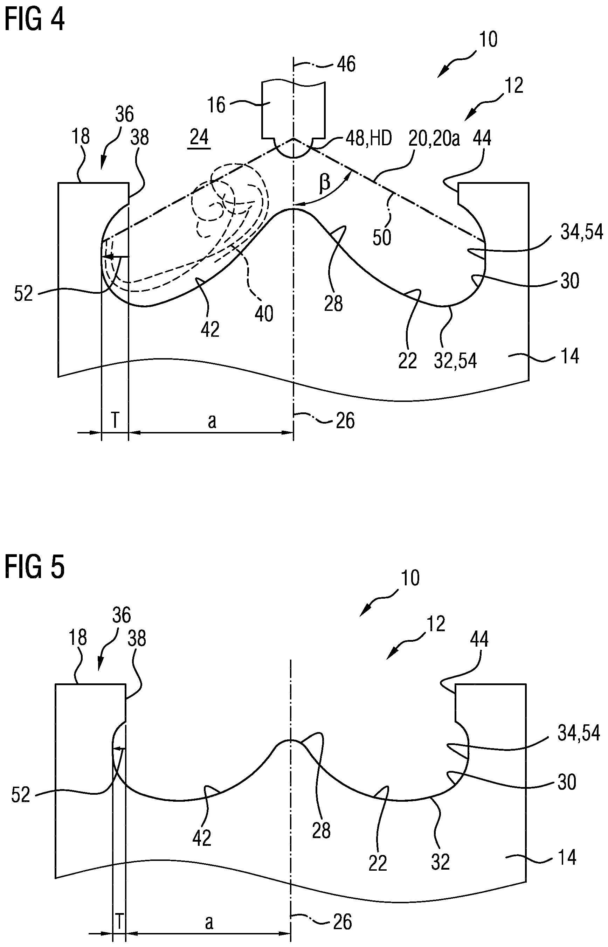

Fig. 4 zeigt eine Schnittdarstellung einer für Dieselkraftstoff 20a üblichen Geometrie einer Mulde 22 in dem Muldenkolben 14. Es ist zu sehen, dass die Muldenlippe 38 sehr stark ausgeprägt ist und dazu der Hinterschnitt bzw. die Ausnehmung 34 eine große Tiefe T in ihre Erstreckungsrichtung 52, das heißt radial zu der Kolbenlängsachse 26, aufweist und somit eher groß ausgeprägt ist. Im Vergleich zu einem Abstand a zwischen dem parallel verlaufenden Bereich 44 der Seitenwand 30 und der Kolbenlängsachse 26 weist die Ausnehmung 34 bei der in Fig. 4 gezeigten, aus dem Stand der Technik bekannten Mulde 22 eine Tiefe T auf, die etwa 1/3 dieses Abstandes a beträgt.

Fig. 5 zeigt eine Schnittdarstellung einer ersten Ausführungsform einer in ihrer Geometrie an die Einspritzung des OME-Kraftstoffes 20b angepassten Mulde 22. Es ist zu erkennen, dass hier die Tiefe T der Ausnehmung 34 maximal 1/4 des Abstands a zwischen dem parallel verlaufenden Bereich 44 der Seitenwand 30 und der Kolbenlängsachse 26 beträgt. Je kleiner diese Tiefe T gewählt ist, desto weniger stark ist die Muldenlippe 38 ausgeprägt und kann daher im Betrieb weniger schnell abbrennen.

Fig. 6 zeigt eine Schnittdarstellung einer zweiten Ausführungsform einer bezüglich der Einspritzung von OME-Kraftstoff 20b optimierten Muldengeometrie der Mulde 22 in dem Muldenkolben 14. Hier ist zu sehen, dass die Muldenlippe 38 überhaupt nicht mehr vorhanden ist. Dazu verläuft die Seitenwand 30 in einem Schnitt parallel zu der Kolbenlängsachse 26 im Wesentlichen geradlinig zumindest in einem benachbart zu dem stirnseitigen Kolbenende 36 angeordneten Bereich der Seitenwand 30. Die Ausnehmung 34 und somit die Hinterschneidung fehlt in dieser zweiten Ausführungsform komplett. Ist keine Muldenlippe 38 mehr vorhanden, kann auch keine Muldenlippe 38 mehr abbrennen.

Fig. 6 zeigt dabei eine Ausführungsform, bei der die Seitenwand 30 im Wesentlichen von der Kolbenlängsachse 26 weg geneigt ausgebildet ist. Es ist jedoch auch alternativ denkbar, dass die Seitenwand 30 benachbart zu dem stirnseitigen Kolbenende 36 parallel zu der Kolbenlängsachse 26 verläuft.

Um einen im Wesentlichen geradlinigen Verlauf der Seitenwand 30 im Bereich des stirnseitigen Kolbenendes 36 zu erreichen, weist die Seitenwand 30 vorteilhaft eine Krümmung 54 auf, die sich ausgehend von dem Muldenboden 42 bis zu dem stirnseitigen Kolbenende 36 hin stetig verkleinert und insbesondere von Anfang an kleiner ist als eine Krümmung 54 des U-förmigen Übergangsbereiches 33.

**Patentansprüche**

1.   Brennraumanordnung (12) zum Ausbilden eines Brennraumes (10) für eine Brennkraftmaschine zum Verbrennen eines in den Brennraum (10) eingespritzten OME-Kraftstoffes (20b), aufweisend einen Muldenkolben (14), der sich im Betrieb in dem Brennraum (10) entlang einer Kolbenlängsachse (26) translatorisch bewegt, und der an einer Kolbenstirnseite (18) eine Mulde (22) zur Aufnahme des in den Brennraum (10) eingespritzten OME-Kraftstoffes (20b) aufweist, wobei die Mulde (22) symmetrisch um die Kolbenlängsachse (26) ausgebildet ist und einen zentral angeordneten Dom (28), der in Richtung von einem Muldenboden (42) weg erstreckend umlaufend um die Kolbenlängsachse (26) angeordnet ist, sowie eine umlaufend um die Kolbenlängsachse (26) angeordnete, symmetrisch zu der Kolbenlängsachse (26) ausgebildete Seitenwand (30) zum Begrenzen der Mulde (22) aufweist,

wobei die Seitenwand (30) einen parallel zu der Kolbenlängsachse (26) verlaufenden Bereich (44) und eine sich radial von der Kolbenlängsachse (26) weg erstreckende, umlaufend um die Kolbenlängsachse (26) angeordnete Ausnehmung (34) aufweist, deren Tiefe (T) in Erstreckungsrichtung (52) maximal 1/4 des Abstandes (a) der Kolbenlängsachse (26) zu dem parallel zu der Kolbenlängsachse (26) verlaufenden Bereich (44) der Seitenwand (30) beträgt, wobei eine Einspritzdüse (16) zum Einspritzen des OME-Kraftstoffes (20b) in den Brennraum (10) vorgesehen ist, wobei die Einspritzdüse (16) symmetrisch um eine Düsenlängsachse (46) ausgebildet ist, wobei die Einspritzdüse (16) derart zu der Kolbenstirnseite (18) gerichtet angeordnet ist, dass die Kolbenlängsachse (26) und die Düsenlängsachse (46) zusammenfallen, wobei die Einspritzdüse (16) eine Mehrzahl von Einspritzlöchern (48) mit jeweils einer Lochachse (50) zum Einspritzen des OME-Kraftstoffes (20b) aufweist,
**dadurch gekennzeichnet, dass**
ein Höhenwinkel β zwischen jeder der Lochachsen (50) und der Düsenlängsachse (46) so ausgebildet ist, dass der eingespritzte OME-Kraftstoff (20b) im Betrieb in einem U-förmigen Übergangsbereich (32) zwischen der Seitenwand (30) und dem Dom (28) näher an dem Dom (28) als an der Seitenwand (30) auftrifft,
wobei die Einspritzdüse (16) einen Durchfluss $HD_{OME}$ aufweist, der einem um einen Vergrößerungsfaktor (V) vergrößerten Durchfluss $HD_{Diesel}$ einer Einspritzdüse (16) für Dieselkraftstoff (20a) entspricht, wobei der Vergrößerungsfaktor (V) abhängig ist von einem Verhältnis des Heizwertes $H_{U,Diesel}$ von Dieselkraftstoff (20a) zu einem Heizwert $H_{U,OME}$ von OME-Kraftstoff (20b) eines im Betrieb einzuspritzenden OME-Kraftstoffes (20b), wobei gilt:

$$V = (H_{u,Diesel}/H_{u,OME}) * K,$$

wobei 0,6 < K < 0,85, insbesondere 0,7 < K < 0,8.

2. Brennraumanordnung (12) zum Ausbilden eines Brennraumes (10) für eine Brennkraftmaschine zum Verbrennen eines in den Brennraum (10) eingespritzten OME-Kraftstoffes (20b), aufweisend einen Muldenkolben (14), der sich im Betrieb in dem Brennraum (10) entlang einer Kolbenlängsachse (26) translatorisch bewegt, und der an einer Kolbenstirnseite (18) eine Mulde (22) zur Aufnahme des in den Brennraum (10) eingespritzten OME-Kraftstoffes (20b) aufweist, wobei die Mulde (22) symmetrisch um die Kolbenlängsachse (26) ausgebildet ist und einen zentral angeordneten Dom (28), der in Richtung von einem Muldenboden (42) weg erstreckend umlaufend um die Kolbenlängsachse (26) angeordnet ist, sowie eine umlaufend um die Kolbenlängsachse (26) angeordnete, symmetrisch zu der Kolbenlängsachse (26) ausgebildete Seitenwand (30) zum Begrenzen der Mulde (22) aufweist,

wobei die Seitenwand (30) der Mulde (22) in einem Schnitt parallel zu der Kolbenlängsachse (26) zumindest in einem benachbart zu einem stirnseitigen Kolbenende (36) angeordneten Bereich geradlinig verläuft,
wobei eine Einspritzdüse (16) zum Einspritzen des OME-Kraftstoffes (20b) in den Brennraum (10) vorgesehen ist, wobei die Einspritzdüse (16) symmetrisch um eine Düsenlängsachse (46) ausgebildet ist, wobei die Einspritzdüse (16) derart zu der Kolbenstirnseite (18) gerichtet angeordnet ist, dass die Kolbenlängsachse (26) und die Düsenlängsachse (46) zusammenfallen, wobei die Einspritzdüse (16) eine Mehrzahl von Einspritzlöchern (48) mit jeweils einer Lochachse (50) zum Einspritzen des OME-Kraftstoffes (20b) aufweist,
**dadurch gekennzeichnet, dass**
ein Höhenwinkel β zwischen jeder der Lochachsen (50) und der Düsenlängsachse (46) so ausgebildet ist, dass der eingespritzte OME-Kraftstoff (20b) im Betrieb in einem U-förmigen Übergangsbereich (32) zwischen der Seitenwand (30) und dem Dom (28) näher an dem Dom (28) als an der Seitenwand (30) auftrifft, und wobei die Einspritzdüse (16) einen Durchfluss HDOME aufweist, der einem um einen Vergrößerungsfaktor (V) vergrößerten Durchfluss HDDiesel einer Einspritzdüse (16) für Dieselkraftstoff (20a) entspricht, wobei der Vergrößerungsfaktor (V) abhängig ist von einem Verhältnis des Heizwertes HU,Diesel von Dieselkraftstoff (20a) zu einem Heizwert HU,OME von OME-Kraftstoff (20b) eines im Betrieb einzuspritzenden OME-Kraftstoffes (20b), wobei gilt:

$$V = (Hu,Diesel/Hu,OME) * K,$$

wobei 0,6 < K < 0,85, insbesondere 0,7 < K < 0,8.

3. Brennraumanordnung (12) nach Anspruch 2, **dadurch gekennzeichnet, dass** die Seitenwand (30) der Mulde (22) von der Kolbenlängsachse (26) weg geneigt ausgebildet ist oder dass die Seitenwand (30) der Mulde (22) in dem benachbart zu dem stirnseitigen Kolbenende (36) angeordneten Bereich parallel zu der Kolbenlängsachse (26) angeordnet ist.

4. Brennraumanordnung (12) nach einem der Ansprüche 1 oder 3, **dadurch gekennzeichnet, dass** die Seitenwand (30) der Mulde (22) eine Krümmung (54) aufweist, die sich ausgehend von dem Muldenboden (42) bis zu einem stirnseitigen Kolbenende (36) stetig verkleinert.

5. Brennraumanordnung (12) nach Anspruch 2, **dadurch gekennzeichnet, dass** der Höhenwinkel β so ausgebildet ist, dass der eingespritzte OME-Kraftstoff (20b) im Betrieb auf dem Dom (28) auftrifft.

6. Brennraumanordnung (12) nach einem der Ansprüche 2 oder 5, **dadurch gekennzeichnet, dass** der Höhenwinkel β in einem Bereich von 0° < β < 75 °, insbesondere 30° < β < 70°, mehr insbesondere 45° < β < 65°, liegt.

7. Brennraumanordnung (12) nach einem der Ansprüche 2 bis 6, **dadurch gekennzeichnet, dass** die Einspritzdüse (16) neun bis zwölf Einspritzlöcher (48) aufweist, die symmetrisch um die Düsenlängsachse (46) angeordnet sind.

8. Verwendung einer Brennraumanordnung (12) nach einem der Ansprüche 1 bis 7 zum Einspritzen von OME-Kraftstoff (20b) in einen Brennraum (10) einer Brennkraftmaschine.

**Claims**

1. Combustion chamber arrangement (12) for forming a combustion chamber (10) for an internal combustion engine for burning an OME fuel (20b) injected into the combustion chamber (10), having a bowl piston (14) which moves translationally along a piston longitudinal axis (26) in the combustion chamber (10) during operation and which, on one piston end face (18), has a bowl (22) for receiving the OME fuel (20b) injected into the combustion chamber (10), wherein the bowl (22) is formed symmetrically about the piston longitudinal axis (26) and has a centrally arranged dome (28) which is arranged in an encircling manner about the piston longitudinal axis (26) in a direction extending away from a bowl base (42), and a side wall (30) which is arranged in an encircling manner about the piston longitudinal axis (26), is formed symmetrically with respect to the piston longitudinal axis (26) and is intended for delimiting the bowl (22), wherein the side wall (30) has a region (44) running parallel to the piston longitudinal axis (26) and a recess (34) which extends away radially from the piston longitudinal axis (26), is arranged in an encircling manner about the piston longitudinal axis (26) and the depth (T) of which in the direction of extent (52) is a maximum of 1/4 of the distance (a) of the piston longitudinal axis (26) from that region (44) of the side wall (30) which runs parallel to the piston longitudinal axis (26), wherein an injection nozzle (16) for injecting the OME fuel (20b) into the combustion chamber (10) is provided, wherein the injection nozzle (16) is formed symmetrically about a nozzle longitudinal axis (46), wherein the injection nozzle (16) is arranged directed with respect to the piston end face (18) in such a manner that the piston longitudinal axis (26) and the nozzle longitudinal axis (46) coincide, wherein the injection nozzle (16) has a plurality of injection holes (48), each having a hole axis (50), for injecting the OME fuel (20b), **characterized in that** a height angle β between each of the hole axes (50) and the nozzle longitudinal axis (46) is designed in such a manner that, during operation, the injected OME fuel (20b) in a U-shaped transition region (32) between the side wall (30) and the dome (28) strikes closer to the dome (28) than to the side wall (30), wherein the injection nozzle (16) has a throughflow $HD_{OME}$ which corresponds to a throughflow $HD_{diesel}$, which is enlarged by an enlargement factor (V), of an injection nozzle (16) for diesel fuel (20a), wherein the enlargement factor (V) is dependent on a ratio of the heating value $H_{u,diesel}$ of diesel fuel (20a) to a heating value $H_{u,OME}$ of OME fuel (20b) of an OME fuel (20b) to be injected during operation, wherein:

$$V = (H_{u,diesel}/H_{u,OME}) * K,$$

wherein 0.6 < K < 0.85, in particular 0.7 < K < 0.8.

2. Combustion chamber arrangement (12) for forming a combustion chamber (10) for an internal combustion engine for burning an OME fuel (20b) injected into the combustion chamber (10), having a bowl piston (14) which moves translationally along a piston longitudinal axis (26) in the combustion chamber (10) during operation and which, on one piston end face (18), has a bowl (22) for receiving the OME fuel (20b) injected into the combustion chamber (10), wherein the bowl (22) is formed symmetrically about the piston longitudinal axis (26) and has a centrally arranged dome (28) which is arranged in an encircling manner about the piston longitudinal axis (26) in a direction extending away from a bowl base (42), and a side wall (30) which is arranged in an encircling manner about the piston longitudinal axis (26), is formed symmetrically with respect to the piston longitudinal axis (26) and is intended for delimiting the bowl (22), wherein the side wall (30) of the bowl (22) runs rectilinearly in a section parallel to the piston longitudinal axis (26) at least in a region arranged adjacent to an end-face piston end (36),

wherein an injection nozzle (16) for injecting the OME fuel (20b) into the combustion chamber (10) is provided, wherein the injection nozzle (16) is formed symmetrically about a nozzle longitudinal axis (46), wherein the injection nozzle (16) is arranged directed with respect to the piston end face (18) in such a manner that the piston longitudinal axis (26) and the nozzle longitudinal axis (46) coincide, wherein the injection nozzle (16) has a plurality of injection holes (48), each having a hole axis (50), for injecting the OME fuel (20b),
**characterized in that**
a height angle β between each of the hole axes (50) and the nozzle longitudinal axis (46) is designed in such a manner that, during operation, the injected OME fuel (20b) in a U-shaped transition region (32) between the side wall (30) and the dome (28) strikes closer to the dome (28) than to the side wall (30), and wherein the injection nozzle (16) has a throughflow $HD_{OME}$ which corresponds to a throughflow $HD_{diesel}$, which is enlarged by an enlargement factor (V), of an injection nozzle (16) for diesel fuel (20a), wherein the enlargement factor (V) is dependent on a ratio of the heating value $H_{u,diesel}$ of diesel fuel (20a) to a heating value $H_{u,OME}$ of OME fuel (20b) of an OME fuel (20b) to be injected during operation, wherein:

$$V = (H_{u,diesel}/H_{u,OME}) * K,$$

wherein 0.6 < K < 0.85, in particular 0.7 < K < 0.8.

3. Combustion chamber arrangement (12) according to Claim 2,
**characterized in that** the side wall (30) of the bowl (22) is formed inclined away from the piston longitudinal axis (26), or **in that** the side wall (30) of the bowl (22) is arranged parallel to the piston longitudinal axis (26) in the region arranged adjacent to the end-face piston end (36).

4. Combustion chamber arrangement (12) according to either of Claims 1 and 3, **characterized in that** the side wall (30) of the bowl (22) has a curvature (54) which is continuously reduced in size from the bowl base (42) as far as an end-face piston end (36).

5. Combustion chamber arrangement (12) according to Claim 2, **characterized in that** the height angle β is formed in such a manner that the injected OME fuel (20b) strikes on the dome (28) during operation.

6. Combustion chamber arrangement (12) according to either of Claims 2 and 5, **characterized in that** the height angle β lies in a range of 0° < β < 75°, in particular 30° < β < 70°, more particularly 45° < β < 65°.

7. Combustion chamber arrangement (12) according to one of Claims 2 to 6, **characterized in that** the injection nozzle (16) has nine to twelve injection holes (48) which are arranged symmetrically about the nozzle longitudinal axis (46).

8. Use of a combustion chamber arrangement (12) according to one of Claims 1 to 7 for injecting OME fuel (20b) into a combustion chamber (10) of an internal combustion engine.

## Revendications

1. Agencement de chambre de combustion (12) permettant de réaliser une chambre de combustion (10) pour un moteur à combustion interne servant à la combustion d'un carburant OME (20b) injecté dans la chambre de combustion (10), présentant un piston à cavité (14) qui se déplace en cours de fonctionnement en translation dans la chambre de combustion (10) le long d'un axe longitudinal de piston (26), et qui présente sur une face frontale de piston (18) une cavité (22) pour recevoir le carburant OME (20b) injecté dans la chambre de combustion (10), la cavité (22) étant réalisée de manière symétrique autour de l'axe longitudinal de piston (26) et présentant un dôme (28) disposé au centre qui est disposé dans la direction s'éloignant d'un fond de cavité (42) de manière périphérique autour de l'axe longitudinal de piston (26), ainsi qu'une paroi latérale (30) disposée de manière périphérique autour de l'axe longitudinal de piston (26), réalisée de manière symétrique à l'axe longitudinal de piston (26), pour délimiter la cavité (22),

dans lequel la paroi latérale (30) présente une zone (44) s'étendant en parallèle à l'axe longitudinal de piston (26) et un évidement (34) s'éloignant radialement de l'axe longitudinal de piston (26), disposé de manière périphérique autour de l'axe longitudinal de piston (26), la profondeur (T) dudit évidement dans la direction d'extension (52) mesurant au maximum 1/4 de la distance (a) de l'axe longitudinal de piston (26) à la zone (44) de la paroi latérale (30) s'étendant en parallèle à l'axe longitudinal de piston (26), dans lequel un injecteur (16) est prévu pour injecter le carburant OME (20b) dans la chambre de combustion (10), l'injecteur (16) étant réalisé de manière symétrique autour d'un axe longitudinal d'injecteur (46), dans lequel l'injecteur (16) est disposé en étant dirigé vers la face frontale de piston (18) de telle sorte que l'axe longitudinal de piston (26) et l'axe longitudinal d'injecteur (46) coïncident, dans lequel l'injecteur (16) présente une pluralité d'orifices d'injection (48) ayant respectivement un axe d'orifice (50) pour injecter le carburant OME (20b),

**caractérisé en ce qu'**un angle d'élévation β entre chacun des axes d'orifice (50) et l'axe longitudinal d'injecteur (46) est réalisé de telle sorte que le carburant OME injecté (20b) est en cours de fonctionnement incident dans une zone de transition en forme de U (32) entre la paroi latérale (30) et le dôme (28), plus près du dôme (28) que sur la paroi latérale (30),

dans lequel l'injecteur (16) présente un débit $H_{DOME}$ qui correspond à un débit $HD_{Diesel}$ d'un injecteur (16) pour un carburant diesel (20a), augmenté d'un facteur d'augmentation (V), dans lequel le facteur d'augmentation (V) dépend d'un rapport entre la valeur calorifique $H_{U,Diesel}$ du carburant diesel (20a) et une valeur calorifique $H_{U,OME}$ du carburant OME (20b) d'un carburant OME (20b) à injecter en cours de fonctionnement, avec la condition que :

$$V = (H_{U,Diesel}/H_{U,OME}) * K,$$

où 0,6 < K < 0,85, en particulier 0,7 < K < 0,8.

2. Agencement de chambre de combustion (12) permettant de réaliser une chambre de combustion (10) pour un moteur à combustion interne servant à la combustion d'un carburant OME (20b) injecté dans la chambre de combustion (10), présentant un piston à cavité (14) qui se déplace en cours de fonctionnement en translation dans la chambre de combustion (10) le long d'un axe longitudinal de piston (26), et qui présente sur une face frontale de piston (18) une cavité (22) pour recevoir le carburant OME (20b) injecté dans la chambre de combustion (10), la cavité (22) étant réalisée de manière symétrique autour de l'axe longitudinal de piston (26) et présentant un dôme (28) disposé au centre qui est disposé dans la direction s'éloignant d'un fond de cavité (42) de manière périphérique autour de l'axe longitudinal de piston (26), ainsi qu'une paroi latérale (30) disposée de manière périphérique autour de l'axe longitudinal de piston (26), réalisée de manière symétrique à l'axe longitudinal de piston (26), pour délimiter la cavité (22), dans lequel, dans une coupe parallèle à l'axe longitudinal de piston (26), la paroi latérale (30) de la cavité (22) s'étend de manière rectiligne au moins dans une zone disposée de manière adjacente à une extrémité de piston frontale (36), dans lequel un injecteur (16) est prévu pour injecter le carburant OME (20b) dans la chambre de combustion (10), l'injecteur (16) étant réalisé de manière symétrique autour d'un axe longitudinal d'injecteur (46), dans lequel l'injecteur (16) est disposé en étant dirigé vers la face frontale de piston (18) de telle sorte que l'axe longitudinal de piston (26) et l'axe longitudinal d'injecteur (46) coïncident, dans lequel l'injecteur (16) présente une pluralité d'orifices d'injection (48) ayant respectivement un axe d'orifice (50) pour injecter le carburant OME (20b),
**caractérisé en ce qu'**un angle d'élévation β entre chacun des axes d'orifice (50) et l'axe longitudinal d'injecteur (46) est réalisé de telle sorte que le carburant OME injecté (20b) est en cours de fonctionnement incident dans une zone de transition en forme de U (32) entre la paroi latérale (30) et le dôme (28), plus près du dôme (28) que sur la paroi latérale (30),
dans lequel l'injecteur (16) présente un débit $H_{DOME}$ qui correspond à un débit $HD_{Diesel}$ d'un injecteur (16) pour un carburant diesel (20a), augmenté d'un facteur d'augmentation (V), dans lequel le facteur d'augmentation (V) dépend d'un rapport entre la valeur calorifique $H_{U,Diesel}$ du carburant diesel (20a) et une valeur calorifique $H_{U,OME}$ du carburant OME (20b) d'un carburant OME (20b) à injecter en cours de fonctionnement, avec la condition que :

$$V = (H_{U,Diesel}/H_{U,OME}) * K,$$

où 0,6 < K < 0,85, en particulier 0,7 < K < 0,8.

3. Agencement de chambre de combustion (12) selon la revendication 2, **caractérisé en ce que** la paroi latérale (30) de la cavité (22) est réalisée en étant inclinée en s'éloignant de l'axe longitudinal de piston (26), ou **en ce que** la paroi latérale (30) de la cavité (22) est disposée dans la zone disposée de manière adjacente à l'extrémité de piston frontale (36) en parallèle à l'axe longitudinal de piston (26).

4. Agencement de chambre de combustion (12) selon l'une quelconque des revendications 1 ou 3, **caractérisé en ce que** la paroi latérale (30) de la cavité (22) présente une courbure (54) qui diminue en continu en partant du fond de cavité (42) jusqu'à une extrémité de piston (36) frontale.

5. Agencement de chambre de combustion (12) selon la revendication 2, **caractérisé en ce que** l'angle d'élévation β est réalisé de telle sorte que le carburant OME (20b) injecté est en cours de fonctionnement incident sur le dôme (28).

6. Agencement de chambre de combustion (12) selon l'une quelconque des revendications 2 ou 5, **caractérisé en ce que** l'angle d'élévation β se situe dans une plage de 0° < β < 75 °, en particulier de 30° < β < 70°, plus particulièrement de 45° < β < 65°.

7. Agencement de chambre de combustion (12) selon l'une quelconque des revendications 2 à 6, **caractérisé en ce que** l'injecteur (16) présente de neuf à douze orifices d'injection (48) qui sont disposés de manière symétrique autour de l'axe longitudinal d'injecteur (46).

8. Utilisation d'un agencement de chambre de combustion (12) selon l'une quelconque des revendications 1 à 7 pour injecter un carburant OME (20b) dans une chambre de combustion (10) d'un moteur à combustion interne.

FIG 1

FIG 2

# FIG 3

FIG 4

FIG 5

# FIG 6

# FIG 7

## Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 3016926 A1
- WO 2016051623 A1